# EUROPEAN PATENT SPECIFICATION

(11) **EP 1 142 737 B1**
(45) Date of publication and mention of the grant of the patent: **28.09.2005**
(21) Application number: 01107370.7
(22) Date of filing: 26.03.2001
(51) Int. Cl.: B60J 5/04, B60J 5/00

(54) **A motor vehicle door with a side-reinforcing bar**
Kraftfahrzeugtür mit Seitenschutzstange
Porte de véhicule à moteur comprenant une barre de protection latérale

(30) Priority: 05.04.2000 IT TO000322
(43) Date of publication of application: 10.10.2001
(73) Proprietor: COMAU SpA, 10095 Grugliasco (Torino) (IT)
(72) Inventor: Coppero. Elio, 10090 Rosta(Torino) (IT); Molina, Giuseppe, 10029 Villastellone(Torino) (IT)
(74) Representative: Fioravanti, Corrado

(56) References cited:
- US-A- 5 094 034
- US-A- 5 544 930
- US-A- 5 580 120

## Description

The present invention relates to a motor vehicle door with a side-reinforcing bar, including a frame, static connection means for connecting the bar to the frame in its undeformed, rest condition, and dynamic connection means for connecting the bar to the frame should it be in an active condition, in which it is bent as a result of stress from outside the vehicle.

In prior art doors of this type, the side-reinforcing bar is generally fixed to the frame by welding or by known connection means which are responsible both for holding the bar adjacent the frame in its undeformed condition and for securing it to the frame when it is deformed as a result of external stress transmitted to the frame, typically caused by a body hitting the door. Generally speaking, known means for fixing the bar ensure both the static connection and the dynamic connection of the bar. In this situation, the fixing means must be constructed so as to provide a compromise able to ensure both static connection and dynamic connection, thereby generally increasing both weight and manufacturing costs and thus the production cost of the whole door.

This problem is not too acute when the bar and the frame are made of the same weldable material, such as steel plate, and are fixed together in a welding operation simultaneously providing both static connection and dynamic connection. However, if the materials constituting the bar and the frame cannot be welded easily, or at all, and must therefore be provided with other connection means, for example fixing screws, additional mechanical work must be carried out and additional connection means must be used, which need to be big enough to resist stress resulting from deformation of the bar and are thus relatively complex, heavy and expensive to manufacture.

US-A-5 544 930 discloses a motor vehicle door with a side-reinforcing bar having the features defined in the preamble of Claim 1.

In order to overcome the above disadvantages, the present invention provides a vehicle door as defined in the appended claims.

Thanks to the arrangement of the invention, the static and dynamic connection means of the bar are essentially independent of each other, so that they can be individually optimised to perform their function most effectively. This makes it possible to form the means for fixing the bar to the frame to be simpler, lighter and more economical than known means which are responsible for both static and dynamic connection of the bar, and also make it easier to fit the bar onto the frame. In particular, the dynamic connection means for the bar are constituted by members operable to force fit into seats in the frame should the bar bend, without there being any need for screw means.

Further characteristics and advantages of the invention will become apparent from the detailed description which follows, provided purely by way of non-limitative example, with reference to the appended drawings, in which:

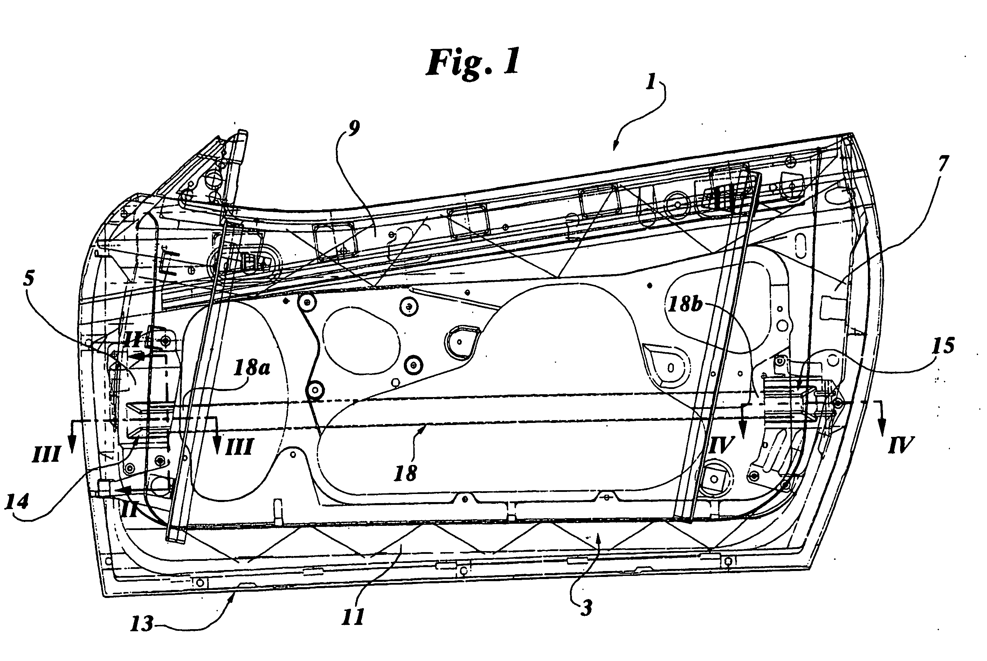

Figure 1 is an elevational schematic side view from inside the door of the invention fitted with a side-reinforcing bar;

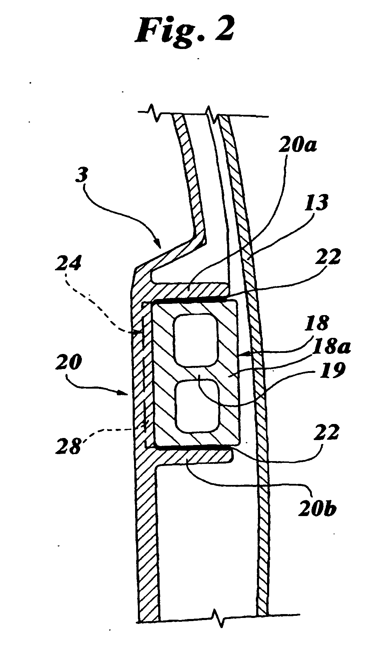

Figure 2 is an elevational sectioned view taken on the line II-II of Figure 1,

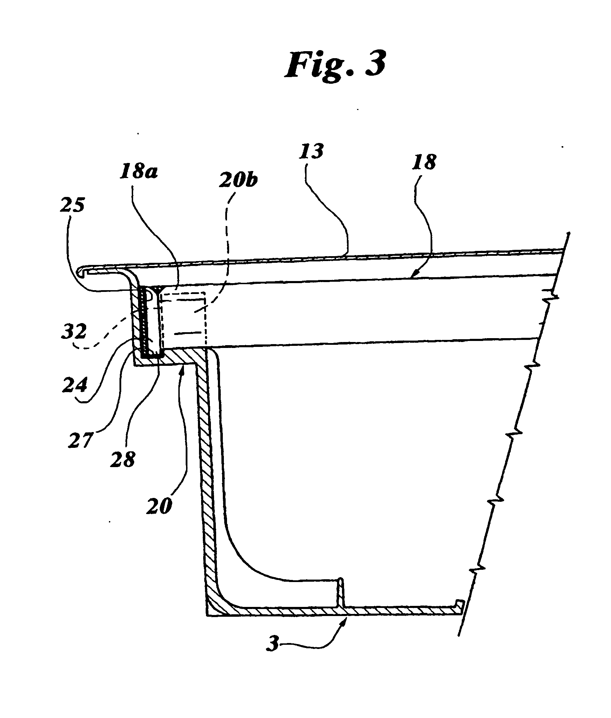

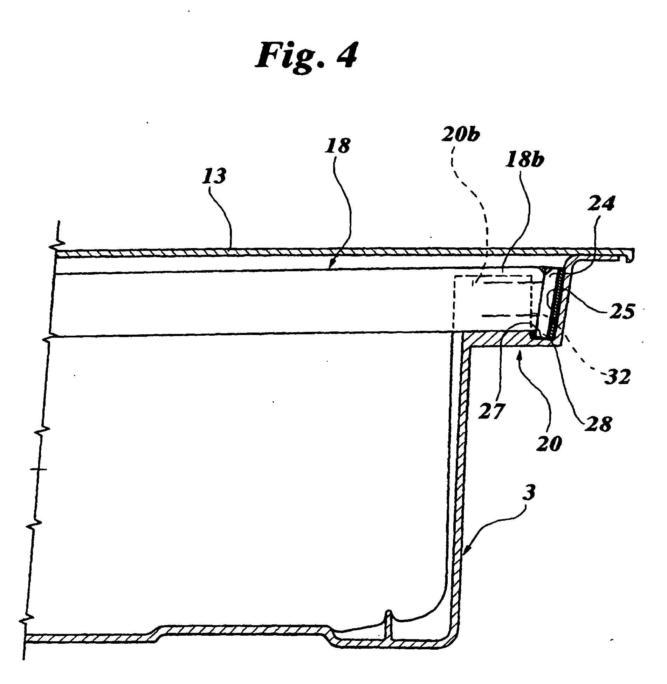

Figures 3 and 4 are similar elevational sectioned views taken on the lines III-III and IV-IV respectively of Figure 1; and
Figure 5 is a schematic perspective view of an end portion of a side-reinforcing bar according to a variant of the invention.

With reference to the drawings, a motor vehicle door is generally indicated 1, specifically a front right hand door. The door 1 includes a frame 3 of a light alloy, preferably a magnesium-based alloy, and shaped like a half-shell. It includes a front upright 5 and a rear upright 7 which are substantially parallel and rigidly connected at their upper and lower portions by means of a pair of cross members 9 and 11, respectively upper and lower.

The casting of the frame 3 is formed by hot forming the light alloy of which it is made, typically in a die-casting operation whereby the molten alloy is poured under pressure into a die, or in a thixoforming operation whereby light-alloy elements are heated to a plastic consistency and then compressed into a mould, causing the elements, in particular the uprights 5, 7 and the cross members 9, 11 to be formed in one piece.

The frame 3 is adapted to have a skin panel 13 fitted to its outer surface, with reference to the door once fitted onto the relevant motor vehicle, the skin panel 13 preferably being constituted by a sheet of plastics material or by sheet metal, aluminium for example.

During the casting of the frame 3, a pair of seats 14, 15 are conveniently formed near the uprights 5 and 7 for engagement by respective end portions 18a, 18b of a side-reinforcing bar 18 for the door 1, arranged transverse the uprights 5 and 7.

The bar 18 comprises an elongate structural, conveniently of aluminium, having a cross section substantially the shape of an 8, so that it forms an intermediate longitudinal reinforcement rib 19. Having been brought up to the frame 3 in a direction substantially perpendicular to the overall plane thereof, the bar is coupled to the frame so that its end portions 18a, 18b fit into a pair of fork-like formations 20 formed in one piece with the frame 3.

Each formation 20 includes a pair of parallel arms 20a and 20b, upper and lower respectively, which project from the frame 3 perpendicular to the general plane thereof. A layer of adhesive material, of a known semi-structural type, for example, is interposed between the arms 20a and 20b and the corresponding portions 18a, 18b of the bar 18, so as to form a static connection between the bar 18 and the frame 3.

A transverse plate 24, also conveniently of aluminium and slightly larger than the cross section of the bar 18, is fixed flat to each end 18a, 18b thereof, in such a way that an edge of each plate 24 extends beyond the section of each bar 18. Each protruding edge constitutes a retainer tongue 28 for insertion, when the bar 18 is fitted, into a corresponding elongate cavity 27 adjacent a seat 25 for housing an associated plate 24.

When the bar 18 is not deformed, the retainer tongues 28 are positioned in the cavities 27, possibly with some clearance. They form a very simple and economical structure which provides, however, a highly reliable means of dynamic connection for the bar 18, should this bend as a result of an external impact, in which case the retainer tongues 28 would be forced into the cavities 27 in the manner of a hook, transmitting the stress from the bar 18 to the frame 3, in such a way that the frame 3 can cooperate with the bar 18 to resist the applied stress.

In this condition, the fact that the adhesive material 22 interposed between the fork-like formations 20 and the bar 18 could give way does not affect the reliability of the dynamic connection provided by the retainer tongues 28 and the cavities 27, so that the static connection means of the bar 18 can be simple and inexpensive, since they need only withstand weak stress.

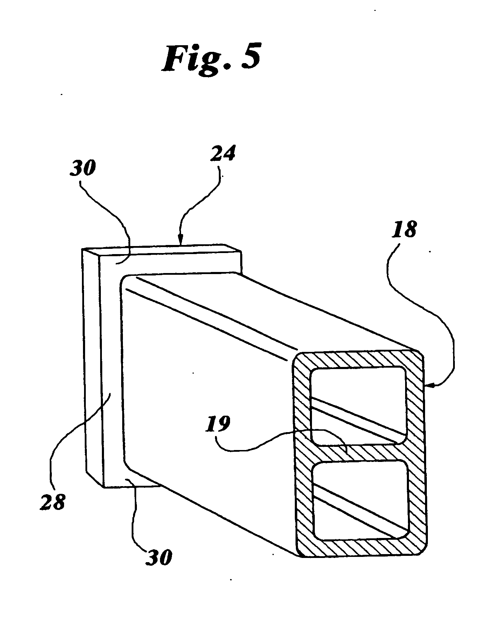

For preference, each plate 24 has an auxiliary edge, or a pair of auxiliary edges extending beyond the cross section of the bar 18 along a direction transverse the retainer tongues 28, thus constituting respective auxiliary gripping tongues 30 (see figure 5). In this case, it is convenient if the formations 20 are positioned and shaped in such a way that the sides 32 of the arms 20a, 20b of each fork-like formation 20 facing the nearest plate 24 act as shoulders against which the gripping tongues 30 abut if the bar 18 is forced to bend, thereby increasing the surface involved in the coupling action of the end portions 18a, 18b of the bar 18 with respect to the seats 14 and 15 of the frame 3.

## Claims

1. A motor vehicle door with a side-reinforcing bar (18), the door including:
a frame (3),
static connection means (20, 22) for fixing the bar (18) to the frame (3) when it is in an undeformed rest configuration, and
dynamic connection means (27, 28) for securing the bar (18) to the frame (3) upon reaching its active configuration, in which it is bent as a result of a force being applied to the motor vehicle from outside,
the dynamic connection means (27, 28) of the bar (18) being independent of the static connection means (20, 22) and including engagement means (28), interposed between each end portion (18a, 18b) of the bar (18) and respective seats (27) adapted to couple the end portions (18a, 18b) of the bar (18) to the frame (3) in the event of the bar (18) being forced into its active configuration, so as to exert, by means of the bar (18), a traction on the frame (3), the traction being applied at the seats (27),
**characterised in that**
the seats (27) for coupling the end portions (18a, 18b) of the bar (18) to the frame (3) are cavities formed in the frame (3) of the door (1), and that
the static connection (20, 22) means include engagement means (20) formed in one piece with the casting of the frame (3) during the forming process thereof.

2. A door according to Claim 1, **characterised in that** the said engagement means (28) are fixed to the end portions (18a, 18b) of the bar (18).

3. A door according to Claim 1 or Claim 2, **characterised in that** the frame (3) is made of a light alloy, in particular a magnesium alloy.

4. A door according to any one of Clams 1 to 3, **characterised in that** each seat includes an elongate slot (27) transverse the bar (18) and substantially parallel to a general plane of the frame (3), and is provided for engagement by a tongue (28) projecting from an end portion (18a, 18b) of the reinforcing bar (18).

5. A door according to claim 4, **characterised in that** each tongue (28) is an edge portion of an end body (24) fixed flat to an end (18a, 18b) of the bar (18).

6. A door according to Claim 4 or Claim 5, **characterised in that** each of the engagement formations (20) is configured like a fork and is arranged near a corresponding seat (27), the fork-like formations (20) being able to receive the bar (18) inserted in a movement substantially perpendicular to the overall plane of the frame (3).

7. A door according to Claim 6, **characterised in that** the end portions (18a, 18b) of the bar (18) have auxiliary gripping means (30) for abutting against respective shoulders (32) of the said fork-like formations (20) when the bar (18) bends to a particular extent.

8. A door according to Claim 7, **characterised in that** the auxiliary gripping means are constituted by edges (30) of the said end bodies (24) of the bar (18), which extend transverse the said tongue (28).

## Patentansprüche

1. Kraftfahrzeugtüre mit einer Seitenverstärkungs-Stange (18), wobei die Türe aufweist:
einen Rahmen (3),
eine statische Verbindungseinrichtung (20, 22), um die Stange (18) am Rahmen (3) zu befestigen, wenn sie sich in einem unverformten Ruhezustand befindet, und
eine dynamische Verbindungseinrichtung (27, 28), um die Stange (18) am Rahmen (3) zu befestigen, wenn sie ihren aktiven Zustand erreicht, in dem sie infolge einer Kraft verbogen wird, die auf das Kraftfahrzeug von außen einwirkt,
wobei die dynamische Verbindungseinrichtung (27, 28) der Stange (18) unabhängig von der statischen Verbindungseinrichtung (20, 22) ist und eine Eingreifeinrichtung (28) aufweist, die zwischen jedem Endteil (18a, 18b) der Stange (18) und entsprechenden Sitzen (27) angeordnet ist, die dazu dienen, um die Endteile (18a, 18b) der Stange (18) mit dem Rahmen (3) dann zu kuppeln, wenn die Stange (18) in ihren aktiven Zustand gezwungen wird, um mit Hilfe der Stange (18) einen Zug auf den Rahmen (3) auszuüben, wobei der Zug auf die Sitze (27) ausgeübt wird,
**dadurch gekennzeichnet, dass**
die Sitze (27), um die Endteile (18a, 18b) der Stange (18) mit dem Rahmen (3) zu kuppeln, Hohlräume sind, die im Rahmen (3) der Türe (1) ausgebildet sind, und dass
die statische Verbindungseinrichtung (20, 22) eine Eingreifeinrichtung (20) aufweist, die in einem Stück mit dem Gussstück des Rahmens (3) während dessen Formvorgangs ausgebildet wird.

2. Türe gemäß Anspruch 1, **dadurch gekennzeichnet, dass** die Eingreifeinrichtung (28) an den Endteilen (18a, 18b) der Stange (18) befestigt ist.

3. Türe gemäß Anspruch 1 oder Anspruch 2, **dadurch gekennzeichnet, dass** der Rahmen (3) aus einer Leichtmetalllegierung hergestellt wird, im Besonderen aus einer Magnesiumlegierung.

4. Türe gemäß irgendeinem der Ansprüche 1 bis 3, **dadurch gekennzeichnet, dass** jeder Sitz einen länglichen Schlitz (27) quer zur Stange (18) und im Wesentlichen parallel zu einer Hauptebene des Rahmens (3) aufweist und so aufgebaut ist, dass eine Zunge (28) eingreifen kann, die von einem Endteil (18a, 18b) der Verstärkungsstange (18) vorspringt.

5. Türe gemäß Anspruch 4, **dadurch gekennzeichnet, dass** jede Zunge (28) ein Endteil eines Endkörpers (24) ist, der an einem Ende (18a, 18b) der Stange (18) flach befestigt ist.

6. Türe gemäß Anspruch 4 oder Anspruch 5, **dadurch gekennzeichnet, dass** jede der Eingreifausbildungen (20) gabelförmig ausgebildet und in der Nähe eines entsprechenden Sitzes (27) angeordnet ist, wobei die gabelförmigen Ausbildungen (20) die Stange (18) aufnehmen können, die mit einer Bewegung im Wesentlichen senkrecht zur Gesamtebene des Rahmens (3) eingesetzt wird.

7. Türe gemäß Anspruch 6, **dadurch gekennzeichnet, dass** die Endteile (18a, 18b) der Stange (18) zusätzliche Greifeinrichtungen (30) besitzen, die auf entsprechenden Schultern (32) der gabelförmigen Ausbildungen (20) aufliegen, wenn die Stange (18) um einen bestimmten Wert verbogen wird.

8. Türe gemäß Anspruch 7, **dadurch gekennzeichnet, dass** die zusätzlichen Greifeinrichtungen von Kanten (30) der Endkörper (24) der Stange (18) gebildet werden, die quer zur Zunge (28) verlaufen.

## Revendications

1. Porte de véhicule à moteur comprenant une barre de protection latérale (18), la porte comprenant :
un encadrement de porte (3),
des moyens de raccordement statiques (20, 22) pour fixer la barre (18) à l'encadrement de porte (3) lorsqu'il est dans une configuration non déformée au repos, et
des moyens de raccordement dynamiques (27, 28) pour fixer la barre (18) à l'encadrement de porte (3) lorsqu'il atteint sa configuration active, dans laquelle il est tordu en conséquence d'une force qui est exercée sur le véhicule à moteur depuis l'extérieur,
les moyens de raccordement dynamiques (27, 28) de la barre (18) étant indépendants des moyens de raccordement statiques (20, 22) et comprenant des moyens de mise en prise (28), intercalés entre chaque portion d'extrémité (18a, 18b) de la barre (18) et des sièges respectifs (27) adaptés pour raccorder les portions d'extrémité (18a, 18b) de la barre (18) à l'encadrement de porte (3) dans le cas où la barre (18) serait forcée à atteindre sa configuration active, de façon à exercer, au moyen de la barre (18), une traction sur l'encadrement de porte (3), la traction étant appliquée au niveau des sièges (27),
**caractérisée en ce que**
les sièges (27) pour raccorder les portions d'extrémité (18a, 18b) de la barre (18) à l'encadrement de porte (3) sont des cavités formées dans l'encadrement de porte (3) de la porte (1) ; et **en ce que**
les moyens de raccordement statiques (20, 22) comprennent des moyens de mise en prise (20) formés d'un seul tenant avec la pièce moulée de l'encadrement de porte (3) au cours du processus de formage de celui-ci.

2. Porte selon la revendication 1, **caractérisée en ce que** lesdits moyens de mise en prise (28) sont fixés aux portions d'extrémité (18a, 18b) de la barre (18).

3. Porte selon la revendication 1 ou 2, **caractérisée en ce que** l'encadrement de porte (3) est fait en un alliage léger en particulier un alliage de magnésium.

4. Porte selon l'une quelconque des revendications 1 à 3, **caractérisée en ce que** chaque siège comprend une fente allongée (27) transversale à la barre (18) et sensiblement parallèle à un plan global de l'encadrement de porte (3), et qui est prévue pour la mise en prise par une languette (28) se projetant depuis une portion d'extrémité (18a, 18b) de la barre de protection (18).

5. Porte selon la revendication 4, **caractérisée en ce que** chaque languette (28) est une partie du bord d'un corps d'extrémité (24) fixée à plat à une extrémité (18a, 18b) de la barre (18).

6. Porte selon la revendication 4 ou 5, **caractérisée en ce que** chacune des formations de mise en prise (20) est configurée comme une fourche et est agencée à proximité d'un siège correspondant (27), les formations semblables à une fourche (20) étant aptes à recevoir la barre (18) insérée dans un mouvement sensiblement perpendiculaire au plan global de l'encadrement de porte (3).

7. Porte selon la revendication 6, **caractérisée en ce que** les portions d'extrémité (18a, 18b) de la barre (18) sont munies de moyens de préhension auxiliaires (30) pour venir en butée contre des épaulements respectifs (32) desdites formations semblables à une fourche (20) lorsque la barre (18) se tord dans une certaine mesure.

8. Porte selon la revendication 7, **caractérisée en ce que** les moyens de préhension auxiliaires sont constitués par des bords (30) desdits corps d'extrémité (24) de la barre (18), qui s'étendent transversalement par rapport à ladite languette (28).
